Europäisches Patentamt

(19) European Patent Office

Office européen des brevets

(11) Veröffentlichungsnummer: **0 072 885**
**B1**

# (12) EUROPÄISCHE PATENTSCHRIFT

(45) Veröffentlichungstag der Patentschrift:
30.04.86

(21) Anmeldenummer: 82100349.8

(22) Anmeldetag: 19.01.82

(51) Int. Cl.⁴: **C 02 F 11/00**, C 02 F 1/62,
**B 09 B 3/00**

(54) Verfahren zur Dekontamination natürlicher und technischer Schlämme.

(43) Veröffentlichungstag der Anmeldung:
02.03.83 Patentblatt 83/9

(45) Bekanntmachung des Hinweises auf die Patenterteilung:
30.04.86 Patentblatt 86/18

(84) Benannte Vertragsstaaten:
AT BE CH DE FR GB IT LI LU NL SE

(56) Entgegenhaltungen:
DE - A - 1 517 668
DE - A - 1 517 689
DE - A - 2 808 012
US - A - 4 277 342

CHEMICAL ENGINEERING, Band 84, Nr. 22, Oktober 1977, Seiten 73-86, McGraw-Hill, New York, USA K.H. LANOUETTE: "Heavy metals removal"
ENVIRONMENTAL SCIENCE AND TECHNOLOGY, Band 6, Nr.6, Juni 1972, Seiten 518-522, Easton, PA, USA J.G.DEAN et al.: "Removing hevy metals from waste water"
"Gmelins Handbuch der anorganischen Chemie" 8. Aufl., System-Nr. 33, Cadmium Ergänzungsband, 1959, S. 644

(73) Patentinhaber: DECONTA AG, Im Ufgänt 10, CH-8128 Hinteregg (ZH) (CH)

(72) Erfinder: Müller, German, Prof. Dr., Silchenweg 4, D-6901 Bammental (DE)

(74) Vertreter: Abitz, Walter, Dr.-Ing. et al, Abitz, Morf, Gritschneder, Freiherr von Wittgenstein
Postfach 86 01 09, D-8000 München 86 (DE)

## Beschreibung

Flüsse und Hafenbecken müssen zur Freihaltung von Fahrrinnen und Liegeplätzen laufend ausgebaggert werden; fluß- und hafenbauliche Veränderungen machen ebenfalls umfangreiche Baggerarbeiten erforderlich. Die bei diesen Maßnahmen anfallenden Mengen an Baggergut sind sehr groß und betragen bis zu 100 000 Jahrestonnen pro 100 km Flußlauf. So müssen z. B. allein im Bereich des staugeregelten Neckars (Baden-Württemberg, Bundesrepublik Deutschland) jährlich 140 000 t Schlamm zur Freihaltung der Fahrrinnen ausgebaggert werden; die im Hafengebiet von Hamburg (Elbe) auszubaggernde Schlamm-Menge liegt bei jährlich 1,2 Mio t, im Hafen von Rotterdam fallen ca. 2 Mio t pro Jahr an. Insgesamt rechnet man in der Bundesrepublik Deutschland jährlich mit 2,5 Mio t Baggergut im Binnenland und mit 30 Mio t im Küstengebiet.

Die bisherige Praxis, die ausgebaggerten Schlämme auf Spülfelder oder in stillgelegte Kiesgruben aufzubringen, für den Landschaftsbau zu nutzen oder im Meer zu verklappen, muß immer stärker eingeschränkt werden, da die hohe Belastung der meisten Schlämme mit Schwermetallen diese Entsorgungsarten wegen der damit verbundenen Gefahren für die Umwelt verbietet. Eine Lagerung des kontaminierten Baggerguts in speziell dafür eingerichtete Deponien ist zwar prinzipiell möglich, die dafür anfallenden Kosten sind jedoch enorm (weitgehende Trocknung des Baggerguts, lange und umständliche Transporte, Abdichtung des Deponieraumes, Ableitung des Sickerwassers mit anschließender spezieller Abwasserbehandlung etc.). Die Politische Durchsetzbarkeit ist darüber hinaus häufig in Frage gestellt, da neben der für große Bevölkerungsteile nicht vollständig auszuräumenden Angst vor der immer noch vorhandenen "Giftigkeit" der Ablagerungen auch die mit dem Betreiben einer solchen Deponie (hohes Verkehrsaufkommen, Verschandelung der Landschaft, Lärm und Geruchsbildung etc.) verbundene Belästigung nicht in Kauf genommen wird.

Die Möglichkeit, schwermetall-kontaminiertes Baggergut weiterhin für landwirtschaftliche Zwecke zu nutzen, scheidet vollständig aus, da gerade durch diese in den vergangenen Jahren praktizierte Anwendung überhaupt erst der Beweis geliefert wurde, daß ein starker Transfer von Schwermetallen, insbesondere von Cadmium, auf mit Baggergut "gedüngten" Flächen in die dort erzeugten Nutzpflanzen stattfindet und damit ein direkter Eingang der Schwermetalle in die Nahrungskette des Menschen möglich wurde.

Auch eine an sich mögliche unmittelbare Verwendung von kontaminiertem Baggergut als Rohstoff für die Herstellung von Grobkeramik scheidet aus, weil ein Großteil der Schwermetalle, und hier wiederum bevorzugt die im Vergleich zu anderen Metallen leichter flüchtigen Verbindungen des Cadmiums (und des Quecksilbers) beim Brenn-Prozeß an die Umwelt abgegeben werden. Ein Teil der Schlämme kommt allerdings aufgrund ihrer relativ hohen Konzentration an Eisensulfid von vornherein für eine Verwendung als Ziegelei-Rohstoff nicht in Frage, da beim Brennen Schwefeldioxid freigesetzt wird, das stark korrosiv auf die technischen Anlagen wirkt.

Der Großteil des in Staustufen von Flüssen und in Hafenbecken auszubaggernden Gutes sind feinkörnige Schlämme, die durchschnittlich zu 1/3 aus Feststoffen und 2/3 aus Wasser bestehen. Die stoffliche Zusammensetzung der Schlämme ist je nach geologischen, industriellen und siedlungsmäßigen Gegebenheiten unterschiedlich. Sie hängt stark vom Abtrag anstehender Gesteine und Böden im Einzugsgebiet, von der Art und der Menge des organischen (vorwiegend pflanzlichen) Materials sowie von der Zusammensetzung und Menge der zivilisatorischen Komponenten aus dem häuslichen und industriellen Bereich ab.

Der Feststoffanteil der Flußschlämme besteht im Mittel aus 85 % mineralischen und 15 % organischen Bestandteilen, die sich (hier als Beispiel der Neckar) wie folgt unterteilen:

14 - 27 % Karbonat (Calcit und Dolomit)
30 - 60 % Quarz
10 - 18 % Feldspat
15 - 25 % Tonmineralien (vorwiefend Illit)
2 - 8 % Metalloxidhydrate und -Sulfide, vorwiegend des Eisens
0,4 - 1,2 % Phosphate
6 - 18 % Organische Bestandteile, vorwiegend Humusstoffe, Cellulose und Lignin

Schlammablagerungen aus anderen Binnengewässern Mitteleuropas unterscheiden sich prinzipiell nicht von den hier angeführten Werten. Wie hereits erwähnt, sind Fluß- und Hafenschlämme aus dicht besiedelten und hochindustrialisierten Gebieten in der Regel mit hohen Konzentrationen an Schwermetallen belastet.

Im Juni 1981 entnommene Schlammproben (Baggergut) aus dem Neckar in Horkheim zeigten folgende Schwermetall-Konzentrationen (bezogen auf Trockenmasse):

Cadmium: 43 ppm
Zink: 650 ppm
Blei: 193 ppm
Kobalt: 13 ppm
Nickel: 83 ppm
Chrom: 375 ppm
Kupfer: 329 ppm
Quecksilber: 0,5 ppm
Mangan: 615 ppm
Eisen: 1,85 %

Bei einem Anfall von 140 000 t Baggergut im Neckar pro Jahr entspricht dieser einer jährlichen Schwermetallmenge von ca. 2000 kg Cadmium, 30 300 kg Zink und 15 300 kg Kupfer.

Wie dargestellt wurde, scheitert eine sinnvolle Nutzung von Baggergut in der Landwirtschaft, für die keramische Industrie und selbst für den Landschaftsbau in erster Linie an der hohen Schwermetallbelastung. Lagerung auf Sonderdeponien wäre teuer und bliebe vom ökologischen Standpunkt immer noch problematisch.

Bei der Klärschlammreinigung nach der US-A-4 277 342 bleiben die Schwermetalle in der wässrigen Phase gelöst. Sie können zwar aus dem Restwasser gewonnen werden, aber in konventioneller Technik, ohne dass besondere Massnahmen vorgesehen sind, um die letzten Spuren zu erfassen.

Bei der Reinigung von Industrieabwässern nach der DE-A-1 517 668 werden die Schwermetalle durch Kohlensäurebehandlung unter Druck als basische Schwermetallcarbonate gefällt.

Gegenstand der Erfindung ist demgegenüber ein Schlämme durch Behandlung der Schlämme mit Mineralsäure, Abtrennung des Feststoffanteils und Ausfällung der im Filtrat gelösten Metalle mittels Calciumhydroxid, dadurch gekennzeichnet, dass man die in der wässrigen Phase des gebildeten Hydroxidniederschlages noch vorhandenen Cd-Spuren durch Einleiten von $CO_2$ durch Einbau in das bei der Kohlensäure-Einleitung enstehende Calciumcarbonat (Calcit) eliminiert.

Der grossen Mengen wegen wird dabei vorzugswese im kontinuierlichen Verfahren gearbeitet. Je nach Ausgangskonsistenz des Schlammes kann es günstig sein, mit Wasser zu verdünnen, um die Förderfähigkeit, Rührbarkeit, Beweglichkeit und auch die chemische Reaktionsfähigkeit zu verbessern. Gröbere Beimengungen (Kies, Grobsand) werden durch Absieben entfernt und können direkt als Baumaterial oder Material für den Landschaftsbau verwendet werden, da die Kontamination mit Schwermetallen auf die feinkörnigen Anteile der Schlämme beschränkt ist und nicht (oder nur in äußerst geringem Maße) auch den Grobsand und Kies betrifft.

Danach werden die in den Schlämmen enthaltenen Schwermetallverbindungen durch Behandlung mit Mineralsäuren in ihre wasserlöslichen Metallsalze überführt. Als Mineralsäuren eifnen sich dazu alle starken Säuren, die mit den Schwermetallen wasserlösliche Salze geben, insbesondere Salzsäure, Schwefelsäure und Salpetersäure. Während der Säurebehandlung gehen nicht nur die Schwermetalle in Lösung, sondern auch der im Schlamm enthaltene Anteil an Karbonaten, der in Form von Calcit und auch Dolomit vorliegt, wobei entsprechende Mengen Kohlendioxid entwickelt werden. So entwickelt eine Tonne Baggerschlamm mit 1/3 Feststoffgehalt, in dem 20 % Calciumcarbonat enthalten sind, 29,3 kg Kohlendioxid.

Bei der Säurebehandlung gehen im Schlamm vorhandene Metallsulfide, insbesondere das Eisenmonosulfid, das bei einer beabsichtigten Verwendung von Klärschlamm in der Ziegeleiindustrie beim Brennvorgang korrosives Schwefeldioxid liefern würde, in Lösung.

Die Mineralsäuren werden während des gesamten Lösevorganges laufend verbraucht und nachdosiert. Nach Beendigung des chemischen Lösungsvorfanges wird auf einen pH von max. 1, vorzufsweise um 0,5, eingestellt. Die Reaktion läuft bei Raumtemperatur ab und dauert nur 10 bis 15 Minuten. Wegen der starken Schaumentwicklung sind die praktischen Reaktionszeiten aber länger. Eine Erhöhung der Reaktionsgeschwindigkeit durch Erwärmung kommt aus Kostengründen kaum in Betracht. Die Schaumentwicklung kann aber durch die Dosiergeschwindigkeit der Säure refuliert oder durch Schaumdämpfungsmittel beherrscht werden.

Nach dieser Säurebehandlung sind 90 - 100 % der im Schlamm enthaltenen Schwermetalle herausgelöst; auch die Phosphate sind vollständig in Lösung gegangen.

Die flüssige Phase wird nunmehr vom Festkörper abgetrennt. Hierfür kommen alle gängigen Filtrationssysteme wie z.B. Nutschen, Druckfilter, Filterpressen oder Vakuumfilter in Frage. Für den kontinuierlichen Prozess bieten sich bevorzugt Zentrifugen an. Die Filtrationsgeschwindigkeit und die Filtrierfähigkeit der wegen ihrer Feinheit schwer filtrierbaren Schlämme wird durch Filtrierhilfsmittel, wie z. B. Polyacrylamid, verbessert.

Der säurebehandelte Schlamm muß durch Auswaschen von den noch im Haftwasser gelösten Schwermetallen befreit werden. Soweit dies wegen zu geringer Filtrationsgeschwindigkeit in den Filtervorrichtungen nicht möglich ist, läßt sich dies durch der Filtration vorgeschaltete Sedimentationswaschgänge erreichen. Die säurebehandelten Schlämme werden hierzu in hintereinander geschalteten Absetzbehältern jeweils mit frischem Wasser gewaschen.

Nach dem letzten Wasch- und Sedimentationsvorgang wird dem Schlamm die Hauptmenge des Wassers durch eines der oben genannten Filtrationssysteme entzogen.

Alle anfallenden säure- und schwermetallhaltigen Waschwässer und Filtrate werden vereinigt und dem anschließenden Schwermetall-Fällungsprozeß zugeführt.

Der so erhaltene Rückstand enthält ca. 50 % Trockensubstanz; 1000 kg Schlamm mit ursprünglich 333 kg Trockenstoff liefern im Mittel 534 kg Rückstand mit 267 kg Trockenstoff; ca. 20 % der ursprünglichen Trockenstoffe sind bei der Säurebehandlung in Lösung gegangen.

Dieser Rückstand kann in der anfallenden kompakten Form der Verwertung in der keramischen Industrie, dem Landschaftsbau oder einer normalen Deponie direkt zugeführt werden. Ein besonderer Vorteil des erfindungsgemäßen Verfahrens liegt darin, daß der Schlamm durch die Verminderung des ursprünglichen Wassergehaltes einestarke Volumenverminderung erfährt. Vor der Deponierung ist heute großenteils eine Entwässerung in großen Lufttrocknungsbecken bzw. durch mechanische Verfahren (z. B. Filterpressen) vorgesehen, um die Konsistenz zu festigen und das Volumen zu vermindern. Diese teure Operation wird durch das erfindungsgemäße Verfahren überflüssig.

Das saure Filtrat (einschließlich der Waschwässer) wird mittels Calciumcarbonat, Calciumoxid oder Calciumhydroxid neutralisiert und durch weitere Zugabe von Calciumhydroxid ein pH von 10 eingestellt. Hierbei werden die gelösten Metalle nahezu quantitativ als unlösliche Hydroxide ausgefällt, gelöste Phosphatverbindungen fallen als Eisen-Phosphate aus. Pro 1000 kg Ausgangs-Schlamm werden im Mittel 5 kg Calciumhydroxid benötigt.

Die Ausfällung speziell der noch gelösten Spuren an Cadmium wird durch Einleiten von Kohlendioxid in die Hydroxid-Suspension erreicht. Es tritt hierbei eine Ausfällung von Calciumcarbonat (Calcit) ein, wobei praktisch alle Spuren von Cadmium in das Kristallgitter eingebaut werden. Dieser bevorzugte Einbau beruht auf dem ähnlichen Ionenradius (bei gleicher Wertigkeit) von Calcium und Cadmium und der identischen Kristallstruktur der beiden Karbonate $CaCO_3$ (Calcit) und $CdCO_3$ (Otavit). Zink, Kupfer, Kobalt und Nickel werden ebenfalls bevorzugt in die Calcit-Struktur eingebaut.

Es wird so lange Kohlendioxid eingeleitet, bis der pH auf 9 abgesunken ist.

Das Kohlendioxid wird aus der im Prozeß beim Ansäuern anfallenden Gas-Menge entnommen. Aber auch die Kohlensäure der Luft würde beim offenen Stehenlassen der Hydroxid-Suspension zur Karbonatfällung ausreichen. Aus 1000 kg Schlamm erhält man im Mittel 42 kg feuchten Hydroxid-Carbonat-Niederschlag mit ca. 50 % Trockensubstanz. Der getrocknete Rückstand enthält 6 - 10 % Schwermetalle in Form von Kupfer, Chrom, Kobalt, Nickel Zink und Cadmium und kann einer metallurgischen Aufbereitung zugeführt werden.

Das vom Hydroxid-Karbonat-Niederschlag abgetrennte Filtrat enthält nur noch äußerst geringe Mengen an Schwermetallen in der Größenordnung von 1 ppm bei Blei, Chrom, Zink und Eisen und weniger als 1 ppm für Cadmium, Nickel, Kupfer und Mangan. Diese Konzentrationen liegen unter den zum Wiedereinleiten in die Gewässer zugelassenen Grenzwerten.

Das erfindungsgemäße Verfahren läßt sich im Prinzip ebensogut auf die Dekontamination von Klärschlämmen anwenden. Diese fallen in den Kläranlagen nach der Entwässerung mit einem Feststoffgehalt von 25 - 50 % an, der etwa zur Hälfte organisch ist und eine wertvolle Düngesubstanz darstellt.

Die hohen Anteile an Schwermetallen, insbesondere Cadmium, verbieten auch hier eine landwirtschaftliche Nutzung oder eine Verwendung im Landschaftsbau. Die anfallenden Mengen sind beträchtlich: In einer Großstadt mit 1 Mio. Einwohner fallen ca. 30.000 t jährlich an.

Das erfindungsfemäße Verfahren eröffnet auch für Klärschlämme einen gangbaren Weg zur Dekontamination und deren sinnvollen Nutzbarmachung.

**PATENTBEISPIEL 1**

100 g Baggerschlamm mit einem Gehalt von 33,3 g Feststoff und einem Anteil von 42 ppm Cadmium im Feststoff wurden mit 33,2 g Wasser auf 25 % Feststoff zu einer dünnflüssigen Suspension herunterverdünnt. Anschließend wurde die Suspension bei Raumtemperatur unter Rühren langsam mit 30 %iger Salzsäure versetzt. Die Salzsäurezugabe wurde fortgesetzt, bis das durch die Kohlendioxid-Entwicklung bedingte Schäumen beendet und ein pH von 0,5 erreicht war. Dies dauerte 15 Minuten. Auch nach Beendigung des Schäumens stieg der pH beim Stehen wieder auf über 1 an und wurde durch vorsichtige Zugabe weiterer Salzsäure auf einen konstanten Wert von 0,5 - 1 eingestellt. Insgesamt wurden 15,7 g 30 %iger Salzsäure verbraucht.

Nunmehr wurde auf einer Nutsche der Feststoff von der Lösung abgetrennt und mit 150 g Leitungswasser nachgewaschen. Der Rückstand betrug 61,4 g und enthielt 43,5 % oder 26,7 g Trockensubstanz. 20 % der ursprünglichen Trockensubstanz waren in Lösung gegangen.

Die Atomabsorptions-Spektralanalyse des trockenen Rückstandes ergab einen Cadmium-Restgehalt von 1,6 ppm. Damit waren 96,2 % des ursprünglichen Cadmiumgehalts entfernt.

Dem Filtrat wurde bei Raumtemperatur Calciumhydroxid eingerührt, bis der pH einen konstanten Wert von 10 erreicht hatte. Hierzu waren 0,51 g Calciumhydroxid erforderlich. Nach 10 Minuten hatte sich ein heller Hydroxidniederschlag gebildet.

Anschließend wurde so lange Kohlendioxid einfeleitet, bis der pH auf 9 abgesunken war. Nach 20 Minuten wurde auf einer Nutsche abfiltriert. Der Rückstand betrug 0,5 g mit 42 % Trockenstoff.

Die Analyse erfab im Filtrat einen Cadmiumgehalt von 0,08 ppm.

**PATENTBEISPIEL 2**

100 g Baggerschlamm mit einem Gehalt von 38 g Feststoff und einem Schwermetallanteil von 610 ppm Zink, 310 ppm Kupfer, 620 ppm Mangan, 44 ppm Cadmium und 86 ppm Nickel wurden mit 52 g Wasser auf einen Feststoffgehalt von 25 % verdünnt und anschließend wie in Patentbeispiel 1 beschrieben weiterbehandelt.

Bei der Filtration nach der Säurebehandlung blieb ein Filterkuchen von 70,0 g mit 44,5 % oder 31,2 g Trockenstoff. 18 % der ursprünglichen Trockensubstanz waren in Lösung gegangen.

Die Analyse des Trockenrückstandes ergab, daß 91,15 % des Zinks, 87,74 % des Kupfers, 92,34 % des Cadmiums, 91,61 % des Mangans und 87,21 % des Nickels entfernt waren.

Die im Filtrat des Hydroxid-Carbonat-Niederschligs verblieben Restspuren an Schwermetallen betrugen: 1,5 ppm Zink, 0,15 ppm Kupfer, 0,5 ppm Cadmium, 0,5 ppm Mangan und 0,5 ppm Nickel.

## Patentansprüche

1. Verfahren zur Dekontaminierung von natürlichen und technischen Schlämmen durch Behandlung der Schlämme mit Mineralsäure, Abtrennung des Feststoffanteils und Ausfällung der im Filtrat gelösten Metalle mittels Calciumhydroxid, dadurch gekennzeichnet, dass man die in der wässrigen Phase des gebildeten Hydroxidniederschlages noch vorhandenen Cd-Spuren durch Einleiten von $CO_2$ durch Einbau in das bei der Kohlensäure-Einleitung entstehende Calciumcarbonat (Calcit) eliminiert.

2. Verfahren nach Anspruch 1, dadurch gekennzeichnet, dass durch die Behandlung mit Mineralsäuren ein pH von 0,5 bis 1,0 eingestellt wird.

3. Verfahren nach Anspruch 1 und 2, dadurch gekennzeichnet, dass als Mineralsäure Salzsäure verwendet wird.

4. Verfahren nach Anspruch 1, dadurch gekennzeichnet, dass zur Ausfällung der Schwermetallhydroxide zunächst mit Calciumcarbonat oder gebranntem oder gelöschtem Kalk neutralisiert wird, wobei die Hauptmengedes, Eisens und ein Teil der Schwermetalle ausfällt, anschliessend mit Calciumoxid oder Calciumhydroxid der pH auf 10 gebracht wird, wobei die restlichen Schwermetalle bis auf Spuren ausfallen und die folgende Carbonatfällung durch Kohlensäurebehandlung bei einem pH von 9 erfolgt.

5. Verfahren nach Anspruch 1 bis 4, dadurch gekennzeichnet, dass zur Carbonatausfällung die durch die Säurebehandlung entstehende Kohlensäure benutzt wird.

6. Verfahren nach Anspruch 1 bis 5, dadurch gekennzeichnet, dass Fluss-, Hafen- und Klärschlämme und Schlämme aus Meeresbuchten und Seen erfindungsgemäss entgiftet werden.

## Claims

1. A process for decontaminating natural and industrial sludges by treating said sludges with mineral acid, separating the solids content, and precipitating the metals dissolved in the filtrate by means of calcium hydroxide, characterized in that any Cd traces still present in the aqueous phase of the resulting hydroxide precipitate are eliminated by introducing $CO_2$ to thereby incorporate them into the calcium carbonate (calcite) formed upon the introduction of carbonic acid.

2. Process according to claim 1, characterized in that by the treatment with mineral acids the pH is adjusted to 0.5 to 1.0.

3. Process according to claim 1 and 2, characterized in that hydrochloric acid is used as mineral acid.

4. Process according to claim 1, characterized in that for precipitating the heavy metal hydroxides the material is first neutralized with calcium carbonate or with slaked or burnt lime, whereupon the major amount of iron and a portion of the heavy metals precipitates, thereafter the pH is raised to 10 with calcium oxide or calcium hydroxide, whereupon the residual heavy metals precipitate leaving merely traces, and the subsequent carbonate precipitation is effected by treatment with carbonic acid at a pH of 9.

5. Process according to claims 1 to 4, characterized in that for carbonate precipitation the carbonic acid formed by the acid treatment is used.

6. Process according to claims 1 to 5, characterized in that river, harbor and sewage sludges and silt from ocean bays and lakes are decontaminated according to the invention.

## Revendications

1. Procédé pour décontaminer des boues naturelles et techniques par traitement des boues par un acide minéral, séparation de l'extrait sec et précipitation des métaux dissous dans le filtrat à l'aide d'hydroxyde de calcium, caractérisé en ce qu'on élimine les traces de Cd encore présentes dans la phase aqueuse du dépôt d'hydroxyde formé par introduction de $CO_2$ par incorporation dans le carbonate de calcium (calcite) qui se forme lors de l'introduction de l'anhydride carbonique.

2. Procédé selon la revendication 1, caractérisé en ce qu'on ajuste un pH de 0,5 à 1,0 grâce au traitement par les acides minéraux.

3. Procédé selon la revendication 1 ou 2, caractérisé en ce qu'on utilise comme acide minéral de l'acide chlorhydrique.

4. Procédé selon la revendication 1, caractérisé en ce que, pour précipiter les hydroxydes de métaux lourds, on neutralise d'abord avec du carbonate de calcium ou de la chaux vive ou éteinte, ce qui provoque une précipitation de la majorité du fer et d'une partie des métaux lourds, puis qu'on porte le pH à 10 avec de l'oxyde de calcium ou de l'hydroxyde de calcium, ce qui fait précipiter les métaux lourds résiduels jusqu'à ce qu'il ne reste que des traces, et que la précipitation ultérieure des carbonates s'effectue à pH 9 par traitement par l'anhydride carbonique.

5. Procédé selon les revendications 1 à 4, caractérisé en ce qu'on utilise pour la précipitation des carbonates l'anhydride carbonique qui s'est formé par le traitement aux acides.

6. Procédé selon les revendications 1 à 5, caractérisé en ce qu'on détoxique, selon l'invention, des boues de rivière, de port et d'épuration, et des boues provenant des baies marines et des lacs.